# FASCICULE DE BREVET EUROPEEN

(11) **EP 1 065 003 B1**
(45) Date de publication et mention de la délivrance du brevet: **10.08.2005**
(21) Numéro de dépôt: 00420140.6
(22) Date de dépôt: 26.06.2000
(51) Int. Cl.: B05B 15/12, B05B 15/04, B04C 5/14, B04C 5/181

(54) **Dispositif et procédé de récupération de poudre et installation de projection de produit de revêtement équipée d'un tel dispositif**
Pulverrückgewinnungsvorrichtung- und Verfahren und Sprühbeschichtungsanlage mit einer solchen Vorrichtung
Device and method for recovering powder and spray coating installation with such a device

(30) Priorité: 28.06.1999 FR 9908432
(43) Date de publication de la demande: 03.01.2001
(73) Titulaire: SAMES Technologies, 38240 Meylan (FR)
(72) Inventeur: Buquet, Thierry, 38580 Allevard (FR); Bonal, Stéphane, 38950 Saint Martin le Vinoux (FR); Fossacera, Michel, 38410 Saint Martin d'Uriage (FR); Belmain, Daniel, 38410 Vaulnaveys le Haut (FR)
(74) Mandataire: Myon, Gérard Jean-Pierre

(56) Documents cités:
- EP-A- 0 878 241
- DE-A- 19 817 243

## Description

L'invention a trait à un dispositif et à un procédé de récupération de poudre et à une installation de projection de produit de revêtement pulvérulent comprenant un tel dispositif. DE 198 17 243 décrit un dispositif et un procédé selon le préambule des revendications 1 et 10.

Dans une installation de projection de produit de revêtement, il est connu de récupérer la poudre qui n'a pas été déposée sur les objets à revêtir et qui tombe, pour l'essentiel, en direction du plancher de la cabine. La poudre récupérée est acheminée vers un dispositif de tamisage qui permet d'évacuer les éventuels amas de poudre, les déchets et les impuretés mélangés à la poudre récupérée. Une gaine d'aspiration est généralement prévue dans laquelle il est formé un mélange entre de l'air de transport et la poudre récupérée, ce mélange étant déplacé jusqu'à un cyclone de centrifugation dans lequel les particules de poudre sont séparées de l'air de transport avant d'être dirigées vers un tamis à partir duquel la poudre récupérée est réinjectée dans un circuit d'alimentation en produit de revêtement des projecteurs de l'installation.

Or, la vitesse du mélange d'air et de poudre à l'intérieur du cyclone de séparation peut être très importante, notamment en partie basse du cyclone, c'est-à-dire dans sa zone de plus faible rayon. La poudre impacte donc la grille du tamis avec une vitesse élevée et elle a tendance à frotter sur cette grille avant de se stabiliser, ce frottement provoquant un échauffement pouvant conduire à une fusion, voire parfois une polymérisation totale ou partielle de la poudre sur la face supérieure du tamis, notamment sur la zone extérieure de celui-ci. Ainsi, dans le cas d'un tamis en forme de disque de rayon R, il n'est pas rare que le tamis soit bouché sur une surface annulaire de rayon compris entre R/2 et R. Ce bouchage ou colmatage du tamis entraîne une diminution de ses performances et nécessite un entretien régulier, ce qui majore d'autant les coûts d'exploitation d'une telle installation.

C'est à ces inconvénients qu'entend plus particulièrement remédier l'invention, en proposant un dispositif de récupération de poudre qui évite un échauffement indésirable des particules de poudre lors de leur entrée en contact avec le tamis, et par là même un bouchage ou un colmatage du tamis.

Dans cet esprit, l'invention concerne un dispositif de récupération de poudre dans une installation de projection de produit de revêtement pulvérulent, ce dispositif comprenant :
- au moins un cyclone de séparation de la poudre récupérée dans l'installation et de son air de transport et
- un tamis associé au ou à chaque cyclone,
caractérisé en ce qu'il comprend une plaque perforée disposée sur le trajet de la poudre récupérée, entre le cyclone et le tamis.

La plaque perforée permet de réduire très fortement la vitesse tangentielle du mélange air/poudre, de telle sorte que ce mélange a une vitesse faible, voire presque nulle, lorsqu'il entre en contact avec le tamis, aucun échauffement notable n'étant généré à cette occasion.

Selon un premier aspect avantageux de l'invention, la plaque est réalisée dans un matériau ayant un faible coefficient de frottement avec la poudre, et notamment en polyéthylène ou en polytétrafluoroéthylène. Grâce à cet aspect de l'invention, il n'est pas non plus créé d'échauffement lors des contacts entre les particules de poudres du mélange air/poudre et la plaque perforée.

Selon un autre aspect avantageux de l'invention, la plaque est réalisée dans un matériau électriquement conducteur, ce qui lui permet d'écouler la charge électrique qui est éventuellement créée par effet tribo-électrique lors du frottement des particules de poudre sur la plaque.

La plaque est avantageusement disposée parallèlement à la grille du tamis, au-dessus de celle-ci, à une distance comprise entre 0,5 et 30 cm.

Selon des variantes de réalisation de l'invention, on peut prévoir que la plaque est perforée sur sensiblement toute sa surface ou qu'elle est en forme de disque et perforée uniquement sur une partie annulaire externe.

Quel que soit le mode de réalisation considéré, le diamètre des perforations de la plaque est avantageusement compris entre 2 et 20 mm.

L'invention concerne également une installation de projection de produit de revêtement pulvérulent qui comprend un dispositif de récupération de poudre tel que précédemment décrit. Une telle installation fonctionne avec un meilleur rendement dans la mesure où il n'est pas nécessaire de prévoir de déboucher ou de décolmater périodiquement le tamis qu'elle comprend, alors que la qualité de la poudre récupérée demeure optimale.

L'invention concerne enfin un procédé de récupération de poudre qui peut être mis en oeuvre avec le dispositif tel que précédemment décrit et dans lequel :
- on transporte la poudre récupérée dans une cabine de revêtement vers un dispositif de séparation,
- on sépare la poudre de son air de transport en utilisant des forces centrifuges et on tamise la poudre récupérée. Ce procédé consiste en outre à réduire fortement la vitesse tangentielle de la poudre avant son arrivée dans la zone de tamisage en faisant passer le mélange d'air et de poudre à travers une plaque perforée.

L'invention sera mieux comprise et d'autres avantages de celle-ci apparaîtront plus clairement à la lumière de la description qui va suivre de deux modes de réalisation d'un dispositif conforme à son principe, donnée uniquement à titre d'exemple et faite en référence aux dessins annexés dans lesquels :
- la figure 1 est une représentation schématique de principe d'une installation de projection de produit de revêtement pulvérulent conforme à l'invention ;
- la figure 2 est une vue à plus grande échelle du détail II à la figure 1 ;
- la figure 3 est une vue de dessus d'une plaque perforée utilisée dans l'installation des figures 1 et 2 et
- la figure 4 est une vue analogue à la figure 3 pour une plaque conforme à un second mode de réalisation de l'invention.

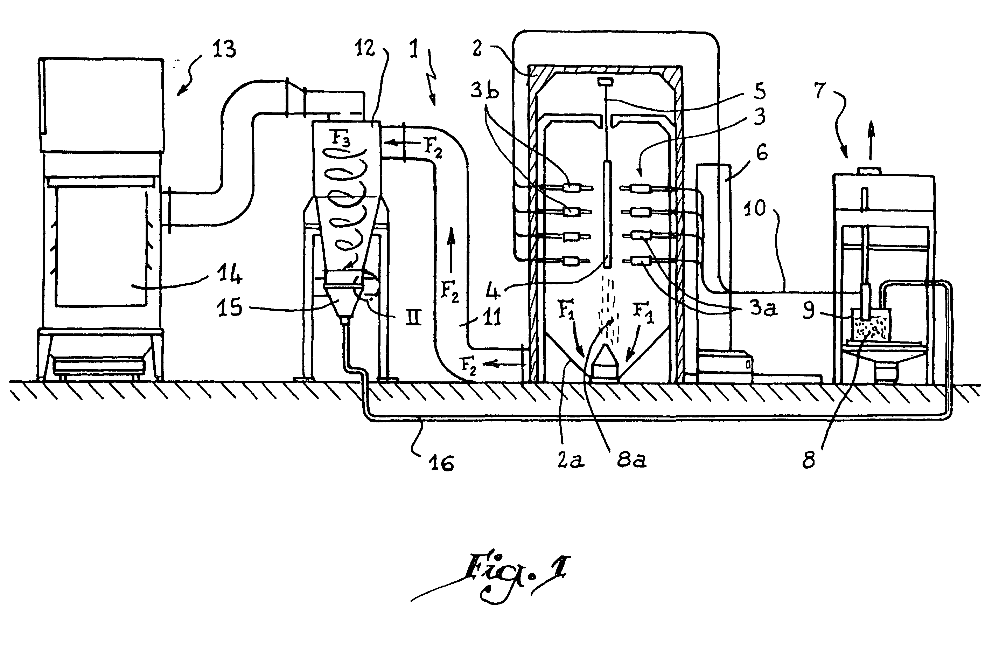

L'installation 1 représentée à la figure 1 comprend une cabine 2 dans laquelle sont disposés plusieurs projecteurs 3 en regard d'objets 4 en cours de déplacement grâce à un convoyeur 5. Les projecteurs 3 sont répartis en une première série de projecteur 3a montés fixes à l'intérieur de la cabine 3 et en une seconde série de projecteurs 3b supportés par un réciprocateur 6. Un système d'alimentation 7 est prévu pour acheminer un produit de revêtement pulvérulent 8, disposé dans un conteneur 9 tel qu'un carton, jusqu'aux projecteurs 3 grâce à une ligne d'alimentation 10. Les projecteurs 3 peuvent être de tout type connu, pneumatiques ou rotatifs, électrostatiques ou non, en particulier tribo-électriques ou non.

Une partie 8a du produit 8 projeté par les projecteurs 3 vers les objets 4 n'atteint pas ces objets et se déverse vers le fond 2a de la cabine 2, comme représenté par les flèches F₁.

Une gaine d'aspiration 11 est raccordée au niveau du fond 2a de la cabine 2 et permet de déplacer la poudre 8a récupérée à partir du fond 2a de la cabine 2, comme représenté par la flèche F₂. La gaine 11 débouche tangentiellement dans la partie supérieure d'un cyclone 12, dans lequel il est créé un écoulement sensiblement hélicoïdal du mélange d'air de transport et de produit 8a récupéré, cet écoulement étant représenté par la flèche F₃.

Une unité d'aspiration 13 permet une filtration fine de l'air issu du cyclone 12 grâce à un ou plusieurs filtres à cartouche 14.

En partie basse du cyclone 12 est installé un tamis 15 destiné à calibrer la poudre récupérée, la sortie du tamis 15 étant reliée par une conduite 16 au système 7, et plus particulièrement au volume intérieur du conteneur 9.

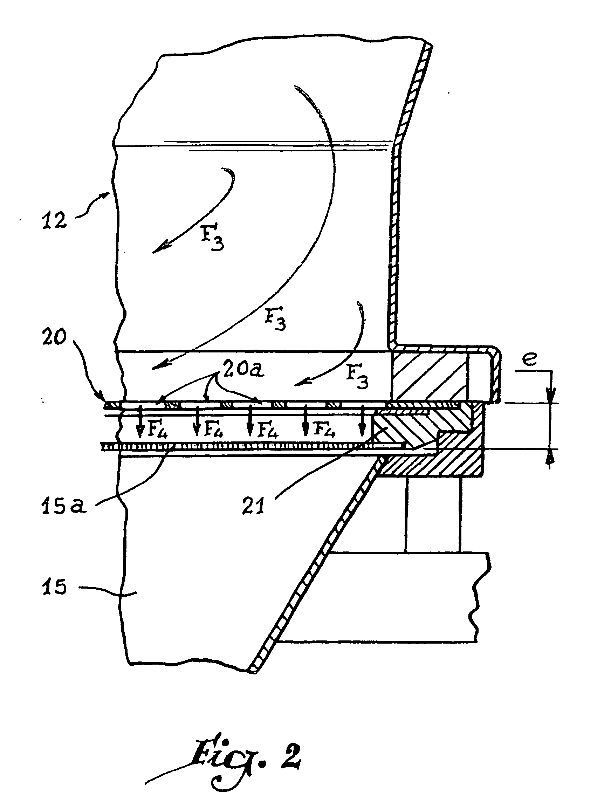

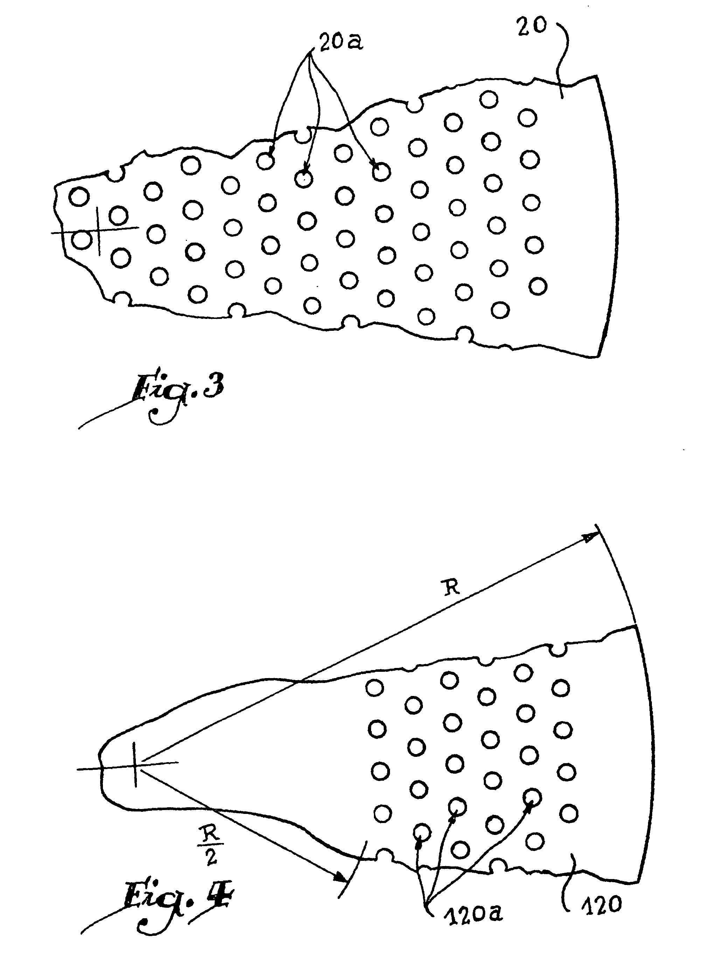

Comme il ressort plus particulièrement des figures 2 et 3, une plaque circulaire perforée 20 est disposée au-dessus de la grille 15a du tamis 15 et parallèlement à celle-ci. Pour ce faire, une entretoise annulaire 21 est intercalée entre les éléments 15a et 20. Cette entretoise 21 constitue également un joint d'étanchéité assurant un fonctionnement correct du cyclone.

Ainsi, le mélange d'air et de poudre qui est dirigé avec une vitesse relativement importante en direction du tamis 15, comme représenté par les flèches F₃ à la figure 2, heurte la plaque 20, de telle sorte que l'essentiel de l'énergie cinétique des particules de poudre est dissipée lors du choc et que celles-ci s'écoulent à faible vitesse, comme représenté par les flèches F₄ en direction du tamis 15 sur lequel elles parviennent sans échauffement notoire. Les particules de poudre ne risquent donc pas de fondre lors de leur contact avec le tamis 15.

Les orifices ou perforations 20a sont sensiblement circulaires et ont un diamètre compris entre 2 et 20 mm, c'est-à-dire largement supérieur au diamètre maximal des particules de poudres qui est de l'ordre de 100 microns. Ainsi, la plaque 20 ne risque pas d'être obturée par l'accumulation de poudre sur sa face supérieure.

Les dimensions des orifices 20a peuvent être choisies de telle sorte que leur plus petite dimension est au moins deux fois supérieures à la maille de la grille 15a.

En outre, la plaque 20 est réalisée en polyéthylène qui présente un coefficient de frottement faible vis-à-vis de la poudre qui est généralement utilisée pour la fabrication de produit de revêtement pulvérulent. Ainsi, il ne risque pas de se produire au niveau des bords des orifices 20a un échauffement qui pourrait conduire à un endommagement de la poudre, notamment à une fusion.

La plaque 20 peut être réalisée en d'autres matériaux adaptés et, notamment, en polytétrafluoroéthylène (PTFE) qui présente également un faible coefficient de frottement avec la poudre.

La plaque 20 est réalisée dans un matériau électriquement conducteur et reliée à la terre, ce qui lui permet d'écouler une charge électrique qui peut se créer par effet tribo-électrique lors du frottement des particules de poudre contre la plaque 20, sur sa face supérieure ou au niveau des bords des orifices 20a.

L'écart e entre la plaque 20 et la tamis 15 est de l'ordre de quelques centimètres, par exemple compris entre 0,5 et 30 cm, ce qui permet la création d'un écoulement stabilisé F₄ entre les éléments 20 et 15, sans augmenter de façon trop importante la hauteur totale du dispositif de récupération de poudre.

La plaque 20 est en forme de disque, ce qui est le plus adapté à la forme usuelle du cyclone 12.

La plaque 120 du second mode de réalisation représenté à la figure 4 est également en forme de disque et l'on note R son rayon. La plaque 120 est pourvue de perforations 120a uniquement dans une zone annulaire externe comprise, par exemple, entre des cercles de rayon R/2 et R de la plaque 120. Il s'avère en effet que l'essentiel de l'écoulement représenté par la flèche F₃ à la figure 2 a lieu à proximité des parois latérales du cyclone 12, de sorte qu'il n'est pas nécessaire de prévoir des perforations dans la partie centrale de la plaque 120. Ceci permet de conférer une rigidité accrue à la plaque 120 par rapport à la plaque 20 et d'améliorer l'efficacité du cyclone.

L'invention a été représentée avec une installation comprenant un unique cyclone de réparation. Il est bien entendu qu'elle s'applique avec une installation comprenant plusieurs tels cyclones, auquel cas une plaque perforée est installée au bas de chaque cyclone, avant le tamis correspondant.

Grâce à l'invention, il est donc possible de diminuer fortement la vitesse tangentielle de la poudre, représentée par la flèche F₃ avant son arrivée dans la zone de tamisage, c'est-à-dire sur le tamis 15, ce qui évite un bouchage ou colmatage de ce tamis et permet de diminuer les arrêts de l'installation de projection de produit de revêtement pour les opérations de nettoyage du tamis.

## Revendications

1. Dispositif de récupération de poudre dans une installation (1) de projection de produit de revêtement pulvérulent, ledit dispositif comprenant :
- au moins un cyclone (12) de séparation de la poudre récupérée (8a) dans l'installation et de son air de transport (F₂) et
- un tamis (15) associé au ou à chaque cyclone,
**caractérisé en ce qu'**il comprend une plaque perforée (20 ; 120) disposée sur le trajet (F₃, F₄) de la poudre récupérée entre ledit cyclone et ledit tamis.

2. Dispositif selon la revendication 1, **caractérisé en ce que** ladite plaque (20 ; 120) est réalisée dans un matériau ayant un faible coefficient de frottement avec la poudre.

3. Dispositif selon la revendication 2, **caractérisé en ce que** ladite plaque (20 ; 120) est réalisée en polyéthylène ou en polytétrafluoroéthylène.

4. Dispositif selon l'une des revendications précédentes, **caractérisé en ce que** ladite plaque (20 ; 120) est réalisée dans un matériau électriquement conducteur.

5. Dispositif selon l'une des revendications précédentes, **caractérisé en ce que** ladite plaque (20 ; 120) est disposée parallèlement à la grille (15a) dudit tamis (15), au-dessus de celle-ci, à une distance (e) comprise entre 0,5 et 30 cm.

6. Dispositif selon l'une des revendications précédentes, **caractérisé en ce que** ladite plaque (20) est perforée sur sensiblement toute sa surface.

7. Dispositif selon l'une des revendications 1 à 5, **caractérisé en ce que** ladite plaque (120) est en forme de disque et perforée uniquement sur une partie annulaire externe.

8. Dispositif selon l'une des revendications précédentes, **caractérisé en ce que** le diamètre des perforations (20a ; 120a) de ladite plaque (20 ; 120) est compris entre 2 et 20 mm.

9. Installation (1) de projection de produit de revêtement pulvérulent, **caractérisée en ce qu'**elle comprend un dispositif de récupération de poudre (12, 15, 20) selon l'une des revendications précédentes.

10. Procédé de récupération de poudre dans une installation (1) de projection de produit de revêtement pulvérulent dans lequel :
- on transporte (F₂) la poudre (8a) récupérée dans une cabine de revêtement (2) vers un dispositif de séparation (12) ;
- on sépare (F₃) la poudre de son air de transport en utilisant des forces centrifuges et
- on tamise (15) la poudre récupérée,
**caractérisé en ce qu'**il consiste à réduite fortement (F₃, F₄) la vitesse tangentielle de la poudre (8a) avant son arrivée dans la zone de tamisage (15), en faisant passer le mélange d'air et de poudre à travers une plaque perforée (20).

## Patentansprüche

1. Vorrichtung zur Rückgewinnung von Pulver in einer Spritzanlage (1) für pulverförmiges Beschichtungsprodukt, wobei die Vorrichtung umfasst:
- mindestens einen Zyklon (12) zur Trennung des in der Anlage rückgewonnenen Pulvers (8a) von seiner Transportluft (F₂) und
- ein dem oder jedem Zyklon zugeordnetes Sieb (15),
**dadurch gekennzeichnet,**
**dass** sie eine Lochplatte (20; 120) umfasst,, die in dem Weg (F₃, F₄) des zurückgewonnenen Pulvers zwischen dem Zyklon und dem Sieb angeordnet ist.

2. Vorrichtung nach Anspruch 1, **dadurch gekennzeichnet, dass** die Platte (20; 120) aus einem Material hergestellt ist, das einen geringen Reibungskoeffizienten mit dem Pulver aufweist.

3. Vorrichtung nach Anspruch 2, **dadurch gekennzeichnet, dass** die Platte (20, 120) aus Polyethylen oder Polytetrafluorethylen hergestellt ist.

4. Vorrichtung nach einem der vorhergehenden Ansprüche, **dadurch gekennzeichnet, dass** die Platte (20; 120) aus einem elektrisch leitenden Material hergestellt ist.

5. Vorrichtung nach einem der vorhergehenden Ansprüche, **dadurch gekennzeichnet, dass** die Platte (20; 120) parallel zum Netz (15a) des Siebs, oberhalb desselben in einem Abstand (e) zwischen 0,5 und 30 cm angeordnet ist.

6. Vorrichtung nach einem der vorhergehenden Ansprüche, **dadurch gekennzeichnet, dass** die Platte (20) auf ihrer im Wesentlichen gesamten Fläche perforiert ist.

7. Vorrichtung nach einem der Ansprüche 1 bis 5, **dadurch gekennzeichnet, dass** die Platte (120) die Form einer Scheibe hat und nur auf einem äußeren Ringbereich perforiert ist.

8. Vorrichtung nach einem der vorhergehenden Ansprüche, **dadurch gekennzeichnet, dass** der Durchmesser der Löcher (20a; 120a) der Platte (20; 120) zwischen 2 und 20 mm beträgt.

9. Anlage (1) zum Spritzen von pulverförmigem Beschichtungsprodukt, **dadurch gekennzeichnet, dass** sie eine Vorrichtung zur Rückgewinnung von Pulver (12, 15, 20) nach einem der vorhergehenden Ansprüche aufweist.

10. Verfahren zur Rückgewinnung von Pulver in einer Spritzanlage (1) für pulverförmiges Beschichtungsprodukt, bei dem man:
- das in einer Beschichtungskabine (2) rückgewonnene Pulver (8a) zu einer Trennvorrichtung (12) transportiert (F₂);
- das Pulver von seiner Transportluft unter Verwendung von Zentrifugalkräften trennt (F₃) und
- das rückgewonnene Pulver siebt (15),
**dadurch gekennzeichnet, dass** es darin besteht, stark die tangentielle Geschwindigkeit des Pulvers (8a) vor seiner Ankunft in der Siebzone (15) zu verringern (F₃, F₄), indem die Mischung aus Luft und Pulver durch eine Lochplatte (20) hindurch geleitet wird.

## Claims

1. A device for recovering powder in a powder coating spraying installation (1), said device comprising:
- at least one cyclone (12) for separating the powder (8a) recovered in the installation and its conveying air (F₂) and
- a screen (15) associated with the or each cyclone,
**characterised in that** said device comprises a perforated plate (20; 120) disposed in the path (F₃, F₄) of the recovered powder between said cyclone and said screen.

2. A device according to claim 1, **characterised in that** said plate (20; 120) is made of a material having a low coefficient of friction in relation to the powder.

3. A device according to claim 2, **characterised in that** said plate (20; 120) is made of polyethylene or polytetrafluoroethylene.

4. A device according to one of the preceding claims, **characterised in that** said plate (20; 120) is made of an electrically conductive material.

5. A device according to one of the preceding claims, **characterised in that** said plate (20; 120) is disposed parallel to the grating (15a) of said screen (15), above the latter, at a distance (e) of between 0.5 and 30 cm.

6. A device according to one of the preceding claims, **characterised in that** said plate (20) is perforated over substantially all its surface.

7. A device according to one of claims 1 to 5, **characterised in that** said plate (120) is in the form of a disk and perforated solely over an outer annular part.

8. A device according to one of the preceding claims, **characterised in that** the diameter of the perforations (20a; 120a) of said plate (20; 120) is between 2 and 20 mm.

9. A powder coating spraying installation (1), **characterised in that** it comprises a powder recovery device (12, 15, 20) according to one of the preceding claims.

10. A process for recovering powder in a powder coating spraying installation (1), in which process:
- the powder (8a) recovered in a coating booth (2) is conveyed (F₂) towards a separating device (12);
- the powder is separated (F₃) from its conveying air using centrifugal forces and
- the recovered powder is screened (15),
**characterised in that** it consists in greatly reducing (F₃, F₄) the tangential speed of the powder (8a) prior to its arrival in the screening zone (15), by passing the mixture of air and powder through a perforated plate (20).
